# EUROPÄISCHE PATENTSCHRIFT

(11) **EP 1 926 764 B1**
(45) Veröffentlichungstag und Bekanntmachung des Hinweises auf die Patenterteilung: **26.12.2018**
(21) Anmeldenummer: 06793228.5
(22) Anmeldetag: 05.09.2006
(51) Int. Cl.: C08G 18/24, C09D 175/04, C08G 18/32, C08G 18/10, C08K 3/00

(54) **VERFAHREN ZUM HERSTELLEN EINER POLYURETHAN BESCHICHTUNG ALS LINER FÜR EIN MESSROHR EINES INLINE-MESSGERÀTS**
METHOD FOR PRODUCING A POLYURETHANE COATING IN THE FORM OF LINER FOR THE MEASURING TUBE OF AN INLINE MEASURING UNIT
PROCEDE DE PRODUCTION D'UN REVETEMENT EN POLYURETHANNE COMME GARNITURE D'UN TUBE DE MESURE D'UN APPAREIL DE MESURE EN CONTINU

(30) Priorität: 20.09.2005 DE 102005044972
(43) Veröffentlichungstag der Anmeldung: 04.06.2008
(73) Patentinhaber: Endress+Hauser Flowtec AG, 4153 Reinach (CH)
(72) Erfinder: AENISHÄNSLIN, Sven, CH-4464 Maisprach (CH); BROBEIL, Wolfgang, 79576 Weil Am Rhein (DE); RUCHEL, Johannes, CH-4144 Arlesheim (CH); STÜNZI, Alexander, CH-4107 Ettingen (CH)
(74) Vertreter: Andres, Angelika Maria
(86) Internationale Anmeldenummer: PCT/EP2006/066017
(87) Internationale Veröffentlichungsnummer: WO 2007/033901

(56) Entgegenhaltungen:
- WO-A2-2006/067077
- DE-A1- 10 044 712
- DE-A1- 10 152 310

## Beschreibung

Die Erfindung betrifft ein Verfahren zum Herstellen eines Kunststoffes, insb. eines Polyurethans. Ferner betrifft die Erfindung ein Verfahren zum Herstellen eines aus solch einem Kunststoff bestehenden Liners für ein Meßrohr eines In-Line-Meßgeräts, insb. ein solches mit einem magnetisch-induktiven Meßaufnehmer

Mittels In-Line-Meßgeräten mit einem magnetisch-induktiven Meßaufnehmer lassen sich bekanntlich die Strömungsgeschwindigkeit und/oder der Volumendurchfluß eines elektrisch leitfähigen Fluids messen, das ein Meßrohr des Meßaufnehmers in einer Strömungsrichtung durchströmt. Hierzu wird im magnetisch-induktiven Meßaufnehmer mittels zumeist einander diametral gegenüberliegende Feldspulen einer an eine Erreger-Elektronik des In-Line-Meßgeräts elektrisch angeschlossenen Magnetkreisanordnung ein Magnetfeld erzeugt, das das Fluid innerhalb eines vorgegebenen Meßvolumens zumindest abschnittsweise senkrecht zur Strömungsrichtung durchsetzt und das sich im wesentlichen außerhalb des Fluids schließt. Das Meßrohr besteht daher üblicherweise aus nicht-ferromagnetischem Material, damit das Magnetfeld beim Messen nicht ungünstig beeinflußt wird. Infolge der Bewegung der freien Ladungsträger des Fluids im Magnetfeld wird nach dem magnetohydrodynamischen Prinzip im Meßvolumen ein elektrisches Feld erzeugt, das senkrecht zum Magnetfeld und senkrecht zur Strömungsrichtung des Fluids verläuft. Mittels wenigstens zweier in Richtung des elektrischen Feldes voneinander beabstandet angeordneter Meßelektroden und mittels einer an diese angeschlossenen Auswerte-Elektronik des In-Line-Meßgeräts ist somit eine im Fluid induzierte elektrische Spannung meßbar, die wiederum ein Maß für den Volumendurchfluß ist. Zum Abgreifen der induzierten Spannung können beispielsweise das Fluid berührende, galvanische oder das Fluid nicht berührende, kapazitive Meßelektroden dienen. Zum Führen und Einkoppeln des Magnetfeldes in das Meßvolumen umfaßt die Magnetkreisanordnung üblicherweise von den Feldspulen umhüllte Spulenkerne, die entlang eines Umfanges des Meßrohrs insb. diametral, voneinander beabstandet und mit jeweils einer freien endseitigen Stirnfläche, insb. spiegelbildlich, zueinander angeordnet sind. Im Betrieb wird somit das mittels der an die Erreger-Elektronik angeschlossenen Feldspulen erzeugte Magnetfeld über die Spulenkerne so in das Meßrohr eingekoppelt, daß es das zwischen beiden Stirnflächen hindurchströmende Fluid wenigstens abschnittsweise senkrecht zur Strömungsrichtung durchsetzt. Wegen ihrer hohen Meßgenauigkeit einerseits und der vielseitigen Anwendbarkeit, insb. auch in nahezu allen gängigen Nennweiten, anderseits haben sich daher In-Line-Meßgeräte mit solchen Meßaufnehmern in nahezu allen Bereichen der industriellen Meßtechnik über Jahrzehnte hinweg etabliert. Als Alternative zu solchen In-Line-Meßgeräten mit magnetisch-induktiven Meßaufnehmern werden, zumindest bei nicht-leitfähigen Medien, oftmals aber auch mittels Ultraschall akustisch messende In-Line-Meßgeräten zur Messung von Strömungsgeschwindigkeiten und/oder Volumendurchflüssen strömender Fluide verwendet.

Aufgrund der geforderten hohen mechanischen Stabilität für in solchen Meßaufnehmern eingesetzte Meßrohre, bestehen letztere - sowohl bei magnetisch-induktiv als auch für akustisch messenden Meßaufnehmern - zumeist aus einem äußeren, insb. metallischen, Trägerrohr von vorgebbarer Festigkeit und Weite, das innen mit einem elektrisch nicht leitenden Isoliermaterial von vorgebbarer Dicke, dem sogenannten Liner, beschichtet ist. Beispielsweise sind in der US-B 65 95 069, der US-A 56 64 315, der US-A 52 80 727, der US-A 46 79 442, der US-A 42 53 340, der US-A 32 13 685 oder der JP-Y 53 - 51 181 jeweils magnetisch-induktive Meßaufnehmer beschrieben, die ein in eine Rohrleitung fluiddicht einfügbares, ein einlaßseitiges erstes Ende und ein auslaßseitiges zweites Ende aufweisendes Meßrohr mit einem nicht-ferromagnetischen Trägerrohr als eine äußere Umhüllung des Meßrohrs, und einem in einem Lumen des Trägerrohrs untergebrachten, aus einem Isoliermaterial bestehenden rohrförmigen Liner zum Führen eines strömenden und vom Trägerrohr isolierten Fluids umfassen.

Der üblicherweise aus einem thermoplastischen, duroplastischen oder elastomeren Kunststoff bestehende Liner dient der chemischen Isolierung des Trägerrohrs vom Fluid. Bei magnetisch-induktiven Meßaufnehmern, bei denen das Trägerrohr eine hohe elektrische Leitfähigkeit aufweist, beispielsweise bei Verwendung metallischer Trägerrohre, dient der Liner außerdem als elektrische Isolierung zwischen dem Trägerrohr und dem Fluid, die ein Kurzschließen des elektrischen Feldes über das Trägerrohr verhindert. Durch eine entsprechende Auslegung des Trägerrohrs ist insoweit also eine Anpassung der Festigkeit des Meßrohrs an die im jeweiligen Einsatzfall vorliegenden mechanischen Beanspruchungen realisierbar, während mittels des Liners eine Anpassung des Meßrohr an die für den jeweiligen Einsatzfall geltenden chemischen und/oder biologischen Anforderungen realisierbar ist.

Wegen seiner guten Verarbeitbarkeit einerseits und seinen guten chemischen und mechanischen Eigenschaften anderseits haben sich neben Hartgummi oder fluorhaltigen Kunststoffen, wie z.B. PTFE, PFA, in besonderem Maße auch Polyurethane als Material für Liner von In-Line-Meßgeräten, insb. solchen mit magnetisch-induktivem Meßaufnehmer, etabliert. Zudem weisen Liner aus Polyurethan, insb. auch in bakteriologischer Hinsicht, zumeist gute biologische Eigenschaften auf und sind insoweit auch gut für die Anwendung auf wäßrige Fluide geeignet.
Bei den für die Herstellung von Linern der beschriebenen Art verwendeten Polyurethanen handelt es sich zumeist um elastomere Kunststoffe, die auf Basis eines unmittelbar vor der Verarbeitung aus reaktiven Ausgangskomponenten gebildeten, fließfähigen, insb, flüssigen, Mehrkomponentensystems hergestellt sind, wobei letzteres jeweils nach dem Zusammenmischen auf die zuvor mit Haftvermittler behandelte Innenwand des Trägerrohrs appliziert und dort innerhalb einer vorgebbaren Reaktionszeit zum Liner aushärten gelassen wird. Polyurethane werden bekanntlich nach dem Polyadditionsverfahren aus Di- und PolyIsocyanaten mit zwei- oder mehrwertigen Alkoholen, wie z.B. Butandiol, hergestellt. Als Primärkomponenten können dabei beispielsweise Präpolymere, aufgebaut aus aliphatischen und/oder aromatischen Ether- und/oder Ester-Gruppen sowie Glycol- und Isocyanat-Gruppen dienen, die mit dem als weitere Primärkomponente zugeführten zwei- oder mehrwertigen Alkohohl reagieren können. Gegebenenfalls werden darüber hinaus farbgebende, insb. pulvrige oder pastöse, Füllstoffe, wie z.B. Ruß, Pigmente oder reaktive Farbstoffe, hinzugemischt. In der DE-A 101 52 310 ist beispielsweise ein Verfahren zur Herstellung von harten kompakten Polyurethanen oder harten Polyurethan-Integralschaumstoffen beschrieben, bei dem ein oberflächig mit flüssigen Ausgangskomponenten versehenes Bauteil in eine geschlossene Form bzw. in eine Preßvorrichtung verbracht und dort bei einer zwischen 40°C und 130°C liegenden Temperatur ausgehärtet wird.
Zur Fertigung von aus Polyurethan bestehenden Linern wird, wie beispielsweise in der WO-A 2006/067077 erwähnt, oftmals ein sogenanntes Ribbon-flow-Verfahren angewendet, bei dem das zuvor hergestellte fließfähige Mehrkomponentensystem mittels eines entsprechenden Gieß- oder Sprühkopf einer entsprechenden Appliziervorrichtung, beispielsweise einer Niederdruck- oder einer Hochdruck-Dosier-/Misch-/Gießanlage, auf der in geeigneter Weise bewegten Innenwand des Trägerrohrs gleichmäßig verteilt wird. Die danach für das Festwerden und Aushärten erforderliche Reaktionszeit des Mehrkomponentensystems kann neben der Dosierung der Ausgangskomponenten in erheblichem Maße auch durch eine geeignete Führung der Verarbeitungstemperatur eingestellt werden. Allerdings lassen sich kurze Reaktionszeiten von weniger als einer Minute, wie sie für eine kostengünstige Herstellung des Liners auf einer etwa bei Raumtemperatur liegenden Verarbeitungstemperatur erforderlich sind, üblicherweise lediglich durch Beigabe eines geeigneten zumeist schwermetall- und/oder aminhaltigen Katalysators zum Mehrkomponentensystem erzielen. Als Katalysatoren kommen dabei im besonderen tertiäre Amine und/oder Quecksilber zum Einsatz.
In Anbetracht dessen, daß der Katalysator selbst im wesentlichen unverändert im fertigen Polyurethan verbleibt, weist letzteres insoweit zwangsläufig auch toxische, zumindest aber physiologisch nicht völlig unbedenkliche Verbindungen auf. Zahlreiche Untersuchungen haben zudem gezeigt, daß besonders derartige Katalysatoren zumindest bei Anwesenheit von Wasser in erheblichem Maße aus dem Liner herausgelöst werden können. Insoweit sind die derzeit in In-Line-Meßgeräten verwendeten, mittels solcher Katalysatoren hergestellten Polyurethane nur bedingt für Anwendungen mit hohen hygienischen Anforderungen, wie z.B. für Messungen im Trinkwasserbereich, geeignet, da die im Trinkwasserbereich für fluidberührende Bauteile gestellten hohen Anforderungen hinsichtlich der chemischen Beständigkeit sowie der physiologischen Verträglichkeit nicht mehr ohne weiteres erfüllt werden können. Besonderes Augenmerk wird im Trinkwasserbereich u.a. auf die Einhaltung der maximal tolerierbaren Migrationsrate (M_{max, TOC}) hinsichtlich eines gesamtorganischen Kohlenstoffgehaltes (TOC) und/oder der für toxikologisch kritische Substanzen definierten spezifischen Migrationsgrenzwerte (SML) gelegt. Gleichermaßen streng sind die Anforderungen hinsichtlich der Wirkung des Liners auf die äußere Beschaffenheit von Trinkwasser, insb. hinsichtlich der Geschmacks-, Färbungs- Trübungs- und/oder Geruchsneutralität des Liners bei Anwesenheit von Wasser, sowie hinsichtlich der maximal tolerierbarer Chlorzehrungsraten (M_{max, Cl}). Erfreulicherweise besteht darüber hinaus jedoch auch die Möglichkeit, wie beispielsweise in der WO-A 2006/067077 vorgeschlagen, metall-organische Verbindungen, wie z.B. Di-n-octylzinndilaurat, als Katalysatoren zu verwenden. Dies hat u.a. nämlich den Vorteil, daß das damit hergestellte Polyurethan gute physiologische, organoleptische wie auch bakteriologische Eigenschaften aufweist und somit durchaus auch für Anwendungen im Trinkwasserbereich geeignet sein kann. Wegen der mittels des Katalysators eingestellten kurzen Reaktionszeit kann somit allerdings das finale Vermengen aller für die Herstellung des Mehrkomponentensystems verwendeten Komponenten zwangsläufig erst unmittelbar vor dem Applizieren des Mehrkomponentensystems auf das Trägerrohr, beispielsweise unter Verwendung von In-Line-Mischern, erfolgen. In Anbetracht aber dessen, daß der Katalysator bezogen auf das gesamte Mehrkomponentensystem üblicherweise nur einen sehr geringen Volumen- bzw. Massenanteil von weniger als einem Prozent ausmacht, wird bei der Fertigung von solchen Linern aus Polyurethan in einem Zwischenschritt des Herstellungsprozesses üblicherweise zunächst der Alkohol mit dem insoweit als Sekundärkomponente dienenden Katalysator in auf das gesamte Mehrkomponentensystem abgestimmter Konzentration versetzt, wodurch aus den beiden Ausgangskomponenten Alkohol und Katalysator eine praktisch als Zwischenkomponente des Mehrkomponentensystems dienende Katalysator-Alkohol-Mischung gebildet wird. Die so erzeugte, aus zumindest dem Alkohol und dem Katalysator bestehende Mischung wird zur Weiterverarbeitung in einen entsprechenden Vorratsbehälter der oben genannten Appliziervorrichtung gegeben und dort in einer für die eigentliche Fertigung einer Serie von Linern ausreichenden Menge, beispielsweise etwa 20 - 50 Liter, vorgehalten. Bei der Herstellung von Meßaufnehmern der beschriebenen Art in kleinen und mittleren Serien kann die Ausstoßrate beispielsweise in einer Größenordnung von etwa 50 - 100 Stück pro Tag liegen, woraus sich bei einem Einsatz, je nach Nennweite des Meßrohrs, von etwa 0.5 - 3 kg des Mehrkomponentensystems pro Meßaufnehmer, eine Tagesrationen für solche Katalysator-Alkohol-Mischungen zwischen etwa 0.5 kg und etwa 2 kg ergeben würden. Infolge des vorgelagerten Zusammenmischens von Alkohol und Katalysator wird somit erreicht, daß auch der Katalysator, insb. auch beim Applizieren nur sehr kleiner Mengen des Mehrkomponentensystems, beim finalen Vermengen aller Komponenten mit vertretbarem technischen Aufwand präzise dosierbar ist. Darüber hinaus kann auf diese Weise das Mehrkomponentensystem mittels einer im Vergleich zur Gesamtzahl der dafür nominell verwendeten Ausgangs- und/oder Zwischenkomponenten verringerten Anzahl von Vorratsbehältern bzw. mittels weniger verzweigten und insoweit einfacher aufgebauten In-Line-Mischern angemischt werden.
Es hat sich jedoch gezeigt, daß bei der Verwendung solcher vorab hergestellten Katalysator-Alkohol-Mischungen je nach Zusammensetzung der Fall eintreten kann, daß diese, insb. bei Verwendung von metall-organischen Katalysatoren, durchaus hoch reaktiv und insoweit chemisch instabil sein können. Dies kann im besonderen, wie beispielsweise auch im Artikel "Solvolytic Degeneration of Aliphatic Polyesteroligomers: Poly(Tetramethylene Adipate) Diol", Mormann W., Wagner J., Laboratorium für Makromolekulare Chemie der Universität-GH Siegen, FB 8, August 1987 ausgeführt, auf in solchen Mischungen ablaufenden Alkoholyse- bzw. Solvolyse-Reaktionen zurückgeführt werden. So konnten beispielsweise für Katalysator-Alkohol-Mischungen mit Butandiol und Di-n-octylzinndilaurat entsprechende Verfallszeiten von weniger als zwei Tagen experimentell festgestellt werden. Folglich können auch für die Herstellung des Polyurethans vorab entsprechend angemischte Gebinde solcher Katalysator-Alkohol-Mischungen nicht immer über längere, für den Fertigungsprozeß von Linern technologisch sinnvolle Zeiträume von möglichst mehr als zwei Wochen vorgehalten werden. Umgekehrt kann der wiederkehrende Tagesbedarf an solchen Katalysator-Alkohol-Mischungen, beispielsweise bei der Herstellung von den eingangs erwähnten magnetisch-induktiven Meßaufnehmern, im voraus nur sehr ungenau abgeschätzt werden. Dies im besonderen auch deshalb, weil beispielsweise Meßaufnehmer der beschriebenen Art im wesentlichen "just-in-time" gefertigt werden und somit der jeweilige Herstellungsprozeß, insb. auch die Fertigung des Liners, oftmals im Kurzfristbereich zu führen ist. Infolgedessen kann die Ausstoßrate an Meßaufnehmern pro Tag und somit auch die Menge des täglich zu verarbeitenden Mehrkomponentensystems in erheblichem Maße schwanken, wobei die Spannbreite durchaus in Bereichen von 100% oder auch darüber liegen kann. Somit kann ein Problem bei der Herstellung und Verarbeitung von Mehrkomponentensystemen der beschriebenen Art unter Verwendung von Katalysator-Alkohol-Mischungen z.B. darin bestehen, daß einerseits von der eingesetzten Katalysator-Alkohol-Mischung stets ein Gebinde von für die angefahrene Produktion sicher ausreichender Menge vorzuhalten ist, anderseits dieses Gebinde aber binnen weniger Tage aufzubrauchen ist, um ein Zerfallen bereits in der vorhaltenden Appliziervorrichtung sicher zu vermeiden und eine dadurch bedingte Ausschußproduktion ausschließen zu können.
Im Hinblick darauf, daß die Herstellungsprozesse für solche Meßaufnehmer in hohem Maße flexibel sein müssen und infolgedessen der Tagesbedarf an dem Mehrkomponentensystem praktisch nur im Kurzfristbereich vorab genau abschätzbar ist, ist ein Nachteil von Katalysator-Alkohol-Mischungen der beschriebenen Art im besonderen darin zu sehen, daß die davon vorzuhaltenden Gebinde nahezu zwangsläufig entweder zu groß bemessen ist, wobei der sich daraus ergebende Überschuß schließlich als Sondermüll sehr aufwendig und entsprechend teuer zu entsorgen ist, oder das infolge nicht ausreichend bemessener Gebindegrößen ein auftragsbedingt steigender Bedarf an Meßaufnehmern im Kurzfristbereich nicht ohne weiteres abgedeckt werden kann. Ein weiterer Nachteil solcher Katalysator-Alkohol-Mischungen besteht ferner auch darin, daß die Appliziervorrichtung zwangsläufig vor jedem Befüllen mit einem neuen Gebinde und somit praktisch täglich aufwendig zu reinigen ist, um eine Beeinflussung von dessen chemischen Eigenschaften durch allfällige Rückstände der bereits verfallenen Katalysator-Alkohol-Mischung zu vermeiden.
Eine Aufgabe der Erfindung besteht daher darin, die Herstellung von Mehrkomponentensystemen der beschriebenen Art dahingehend zu verbessern, daß einerseits der Katalysator auch bei Anwendung nur sehr geringer Konzentrationen genau dosierbar ist, und andererseits für das Mehrkomponentensystem verwendete, den Katalysator enthaltende Zwischenkomponenten chemisch ausreichend stabil, insb. auch lagerfähigen, sind sowie die Herstellung von Linern für Meßaufnehmer der beschriebenen Art dahingehend zu verbessern, daß einerseits eine ausreichende Pufferung des Herstellungeprozesses erreicht werden kann, die es ermöglicht auch auf Schwankungen der Ausstoßrate im Kurzfristbereich flexibel reagieren zu können, und daß anderseits sowohl eine möglichst geringe Ausschußrate bei den Linern als auch eine möglichst geringe Überschußrate bei den verwendete Ausgangskomponenten, insb. auch den Zwischenkomponenten, erzielt werden kann. Darüber hinaus soll der Liner möglichst auch den für Trinkwasseranwendungen gestellten hohen chemisch-biologischen und hygienischen Anforderungen genügen können. Zur Lösung der Aufgabe besteht die Erfindung in einem Verfahren gemäß Anspruch 1.
Nach einer ersten Ausgestaltung der Erfindung umfaßt der Schritt des Bildens des ersten Mehrkomponentensystems weiters einen Schritt des Zusammenführens von Sekundärkomponente und Tertiärkomponente.
Nach einer zweiten Ausgestaltung der Erfindung umfaßt der Schritt des Bildens des ersten Mehrkomponentensystems weiters einen Schritt des Zusammenführens von zumindest einem Anteil der zweiten Primärkomponente und der Tertiärkomponente.
Nach einer dritten Ausgestaltung der Erfindung umfaßt der Schritt des Bildens des ersten Mehrkomponentensystems weiters einen Schritt des Zusammenführens von Sekundärkomponente und Tertiärkomponente sowie zumindest einem Anteil der zweiten Primärkomponente. Nach einer Weiterbildung dieser Ausgestaltung der Erfindung erfolgt dieser Schritt des Zusammenführens von Sekundärkomponente und Tertiärkomponente sowie zumindest einem Anteil der zweiten Primärkomponente nach dem zumindest ein Anteil der zweiten Primärkomponente und der Tertiärkomponente miteinander vermischt worden sind. Nach einer vierten Ausgestaltung der Erfindung umfaßt der Schritt des Bildens des zweiten Mehrkomponentensystems weiters einen Schritt des, insb. simultanen, Zusammenführens des ersten Mehrkomponentensystems mit den beiden Primärkomponenten.

Nach einer fünften Ausgestaltung der Erfindung umfaßt der Schritt des Bildens des zweiten Mehrkomponentensystems weiters einen Schritt des, insb. simultanen, Zugebens der ersten Primärkomponente sowie der zweiten Primärkomponente zum ersten Mehrkomponentensystem.

Nach einer sechsten Ausgestaltung der Erfindung umfaßt das Verfahren weiters Schritte des Ansetzens wenigstens eines Gebindes vom ersten Mehrkomponentensystem in einem Vorratsbehälter und des Verwendens des wenigstens einen Gebindes zum Bilden einer Vielzahl, insb. einer Sequenz, von Portionen des zweiten Mehrkomponentensystems mittels eines dem Gebinde vom ersten Mehrkomponentensystem entnommenen Teilvolumens. Nach einer Weiterbildung dieser Ausgestaltung der Erfindung wird das angesetzte Gebinde vom ersten Mehrkomponentensystem über einen Zeitraum von mehr als drei Tagen zum Bilden von Portionen des zweiten Mehrkomponentensystems verwendet.

Nach einer siebenten Ausgestaltung der Erfindung umfaßt das Verfahren weiters Schritte des Applizierens zumindest eines Teilvolumens des zweiten Mehrkomponentensystems auf eine Innenwand eines als Bestandteil eines In-Line-Meßgeräts dienenden, insb. metallischen, Trägerrohrs sowie des Erzeugen eines das Trägerrohr innen auskleidenden Kunststoff-Liners mittels des auf die Innenwand des Trägerrohrs applizierten zweiten Mehrkomponentensystems indem die darin enthaltene Primärkomponente und die darin enthaltene zweite Primärkomponente innerhalb des Trägerrohrs zumindest anteilig miteinander reagieren gelassen werden.

Nach einer achten Ausgestaltung der Erfindung vergehen zwischen dem Schritt des Bildens des ersten Mehrkomponentensystems und dem Schritt des Bildens des zweiten Mehrkomponentensystems wenigstens 24 Stunden, insb. mehr als drei Tage.

Nach einer neunten Ausgestaltung weist die erste Primärkomponente, insb. aliphatische und/oder aromatische, Ether-Gruppen auf.

Nach einer zehnten Ausgestaltung weist die erste Primärkomponente aromatische oder aliphatische Isocyanat-Gruppen auf.

Nach einer elften Ausgestaltung weist die erste Primärkomponente reaktive NCO-Gruppen auf.

Nach einer zwölften Ausgestaltung weist die zweite Primärkomponente funktionelle OH-Gruppen auf.

Nach einer dreizehnten Ausgestaltung handelt es sich bei der zweiten Primärkomponente um ein Diol, insb. ein Butandiol.

Nach einer vierzehnten Ausgestaltung weist die Sekundärkomponente von einem physiologisch unbedenklichen Metall gebildete metall-organische Verbindungen, wie z.B. Zinn-organo-Verbindungen oder dergleichen, auf.

Nach einer fünfzehnten Ausgestaltung weist die Sekundärkomponente zinn-organo Verbindungen, insb. Di-n-octylzinn-Verbindungen, auf.

Nach einer sechzehnten Ausgestaltung handelt es sich bei der Sekundärkomponente um ein Di-n-octylzinndilaurat und/oder ein Di-n-octylzinndimalinat.

Nach einer siebzehnten Ausgestaltung weist die Tertiärkomponente funktionelle OH-Gruppen auf.

Nach einer achtzehnten Ausgestaltung enthält die Tertiärkomponente eine, insb. flüssig oder pastös, reaktive Farbe. Hierbei kann es sich beispielsweise um Reactin® Black X95AB handeln, wie es derzeit von der Firma Milliken Chemical, Tochterfirma Milliken & Company, Spartanburg, South Carolina, US für die Colorierung von Polyurethanen angeboten wird.

Nach einer neunzehnten Ausgestaltung enthält die Tertiärkomponente eine Pigmentfarbe. Nach einer Weiterbildung dieser Ausgestaltung der Erfindung enthält die Tertiärkomponente, insb. pulverförmigen, Kohlenstoffpartikel und/oder Rußpartikel. Hierbei kann es sich beispielsweise um PRINTEX® F 80, wie es von der Firma Degussa AG, Düsseldorf, DE, oder auch ein anderes Schwarzpigment handeln.

Ein Grundgedanke der Erfindung besteht einerseits darin, den für die Fertigung von Linern aus Polyurethan in nur sehr geringer Konzentration benötigten Katalysator vorab mit einer für die Herstellung ebenfalls benötigten Ausgangskomponenten in größeren anzumischen Gebindegrößen, um dadurch eine vereinfachte und Dosierung mit produktionstechnisch vertretbarem Aufwand zu ermöglichen. Anderseits besteht ein Grundgedanke der Erfindung darin, die so erhalten Zwischenkomponente möglichst über einen aus produktionstechnisch Sicht ausreichend großen Zeitraum von mindestens etwa 3 Tagen, möglichst aber mehreren Wochen lagerfähig auszubilden. Dies wird beim vorgeschlagen Verfahren auf einfache Weise dadurch erreicht, daß der in extrem niedriger Konzentration und damit einhergehend in nur sehr geringen Mengen benötigte Katalysator mit dem Füllstoff im, bezogen auf das finale Mehrkomponentensystem, richtigen Konzentrationsverhältnis angemischt wird. Die Erfindung beruht dabei u.a. auf der überraschenden Erkenntnis, daß die so gewonnene, zumindest aus dem Katalysator und dem Füllstoff bestehende Zwischenkomponente, insb. auch im Vergleich zur eingangs erwähnten Katalysator-Alkohol-Mischung, chemisch sehr stabil ist. Infolgedessen kann diese Zwischenkomponente auch über mehrere Tage vorgehalten und entsprechend auch über einen längeren Zeitraum für die Herstellung des gewünschten Kunststoffes, insb. für die Herstellung von Linern der beschriebenen Art, verwendet werden.

Ein Vorteil der Erfindung besteht u.a. darin, daß der Katalysator trotz der benötigten sehr geringen Konzentration sehr genau dosiert werden kann. Infolgedessen können Liner der beschriebenen Art ohne weiteres auch mit sehr kurzen Fertigu ngszeiten und bei vergleichsweise niedrigen Verarbeitungstemperaturen von weniger als 100°C, insb. bei etwa 25°C, mit hoher Qualität und sehr guter Reproduzierbarkeit gefertigten werden. Ein weiterer Vorteil der Erfindung ist auch darin zu sehen, von dem im Vorratsbehälter angesetzten Gebinde entnommene Teilvolumen praktisch jederzeit wiederkehrend ersetzt werden können, insb. auch dann, wenn im Vorratsbehälter noch vom ursprünglich angesetzten Gebinde des ersten Mehrkomponentensystem Restanteile verblieben sind.

Die Erfindung und vorteilhafte Ausgestaltungen werden nachfolgend anhand der Figuren der Zeichnung näher erläutert. Gleiche Teile sind in den Figuren mit gleichen Bezugszeichen versehen. Falls es die Übersichtlichkeit jedoch erfordert, sind Bezugszeichen in nachfolgenden Figuren weggelassen.
Fig. 1 zeigt perspektivisch in einer Seitenansicht ein Meßrohr für ein, insb. magnetisch-induktives, In-Line-Meßgerät,
Fig. 2 zeigt in einem Längsschnitt das Meßrohr von Fig. 1,
Fig. 3 zeigt eine für die Realisierung des erfindungsgemäßen Verfahrens geeignete, als Dosier-/Misch-/Gießanlage ausgebildete Appliziervorrichtung für flüssige Mehrkomponentensysteme.

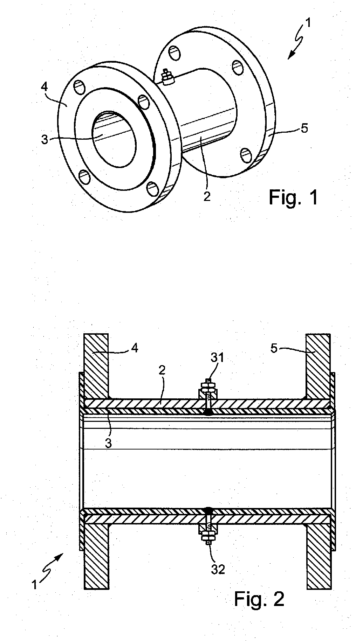

In den Fig. 1 und 2 ist in verschiedenen Ansichten ein Meßrohr für einen Meßaufnehmer eines In-Line-Meßgeräts dargestellt, das dazu dient, ein in einer - hier nicht dargestellten - Rohrleitung strömendes Fluid zu messen, beispielsweise dessen Strömungsgeschwindigkeit und/oder dessen Volumendurchflußrate. Bei dem In-Line-Meßgerät kann es sich beispielsweise um ein magnetisch-induktiv messendes oder auf Basis von Ultraschall akustisch messendes Durchflußmeßgerät handeln. Im besonderen ist das In-Line-Meßgerät dafür vorgesehen, in Trinkwasser-Netzen eingesetzt zu werden.

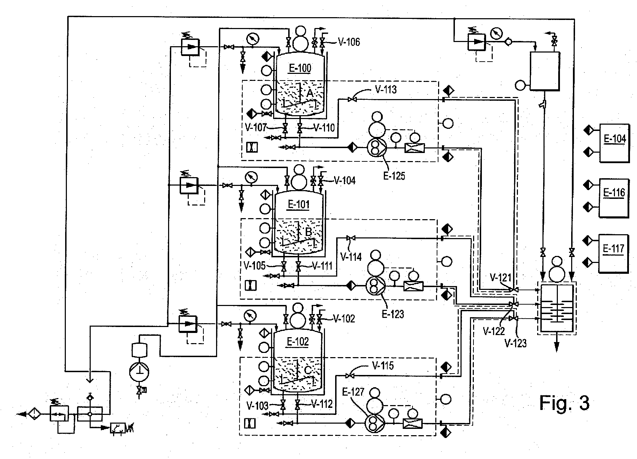

Das Meßrohr 1 weist ein, insb. metallisches, Trägerrohr 2 von vorgebbarem Lumen und einen rohrförmigen, aus einem Kunststoff bestehenden Liner 3 von vorgebbarer Weite auf. Das Trägerrohr 2 besteht aus einem nicht-ferromagnetischen Material, wie z.B. Edelstahl oder einem anderen rostfreien Metall, und umschließt den Liner 3 koaxial, so daß dieser das Trägerrohr 2 innen vollständig auskleidet und insoweit vom im Betrieb hindurchströmenden Fluid praktisch völlig isoliert. Das Meßrohr kann beispielsweise für die Verwendung in einem In-Line-Meßgerät mit einem magnetisch-induktiven Meßaufnehmer vorgesehen sein. Dementsprechend umfaßt der Meßaufnehmer ferner eine am Meßrohr angeordnete Magnetkreisanordnung zum Erzeugen und Führen eines magnetischen Feldes, das im strömenden - hier elektrisch leitfähigen - Fluid eine elektrische Spannung induziert, sowie Meßelektroden zum Abgreifen von im strömenden Fluid induzierten Spannungen. Die Magnetkreisanordnung weist üblicherweise zwei Feldspulen auf, die im Meßbetrieb mit einer - hier nicht dargestellten - dem Erzeugen veränderlicher elektrischer Ströme von vorgebbarer Stromstärke dienenden Erreger-Elektronik des In-Line-Meßgeräts verbunden und zumindest zeitweise von einem entsprechenden Erregerstrom durchflossen sind. Das dadurch erzeugte Magnetfeld durchsetzt das innerhalb des Meßrohrs 1 strömende Fluid zumindest abschnittsweise senkrecht zu dessen Strömungsrichtung. Zum Abgreifen der im strömenden Fluid entsprechend induzierten elektrischen Spannung weist der Meßaufnehmer eine am Meßrohr 1 angebrachte Sensoranordnung auf, die eine erste und eine zweite Meßelektrode 31, 32 umfaßt. Diese liegen einander diametral gegenüber, wobei ein die Meßelektroden imaginär verbindender Durchmesser des Meßrohrs 1 zu einem die Feldspulen imaginär verbindenden Durchmesser des Meßrohrs 1 senkrecht verläuft. Selbstverständlich können die Meßelektroden 31, 32, falls erforderlich, insb. bei mehr als zwei Meßelektroden, am Meßrohr 1 so voneinander beabstandet angeordnet werden, daß sie sich nicht diametral gegenüberliegen. Dies kann z.B. dann der Fall sein, wenn zusätzliche Meßelektroden für Referenzpotentiale oder bei waagerechter Einbaulage des Meßrohrs 1 Meßelektroden zur Überwachung eines Mindestfüllstandes des Fluids im Meßrohr 1 vorgesehen sind. Zum fluiddichten Einfügen in die Rohrleitung weist das Meßrohr 1 ferner an einem ersten Meßrohrende einen ersten Flansch 4 und an einem zweiten Meßrohrende einen zweiten Flansch 5 auf. Trägerohr 2 und Flansche 4, 5 sind jeweils von kreisförmigem Querschnitt. Bei der Herstellung des Meßrohrs 1 selbst wird zunächst das Trägerrohr 2 mit der gewünschten Länge bereitgestellt, und es werden die Metallflansche 4, 5 entsprechend vorbereitet Dann wird an jedem Ende des Trägerrohrs 2 jeweils einer der Flansche 4, 5 so über dessen Außenseite geschoben. Daraufhin wird eine jeweilige Rückseite des jeweiligen Metallflansches 4, 5 mit der Außenseite des Trägerrohrs 2 mechanisch fest und dicht verbunden. Dies kann bei Verwendung eines metallischen Trägerrohrs und metallischer Flansche beispielsweise durch Löten, Hartlöten oder Schweißen geschehen, was zu einer entsprechenden Löt-, Hartlöt- oder Schweißnaht 6 führt. Der von den Flanschen 4, 5 und dem Trägerrohr 2 gebildete Zwischenraum - kann wie im besonderen bei magnetisch-induktiven Meßaufnehmern üblich - mittels eines umlaufenden Bleches verschlossen werden. Der Zwischenraum kann für den Fall, daß das Meßrohr für einen magnetisch-induktiven Meßaufnehmer verwendet werden soll, beispielsweise zur Aufnahme der das erwähnte Magnetfeld erzeugenden Feldspulen und weiterer Komponenten der erwähnten Magnetkreisanordnung dienen. Wenn das Blech dabei als Bestandteil des Magnetkreises dienen soll, ist es vorzugsweise ferromagnetisch auszubilden.
Nach der Vorfertigung des Trägerohrs 2 wird der aus Kunststoff bestehende Liner 3 gefertigt. Dieser besteht gemäß der Erfindung aus einem Polyurethan, Insbesondere kann als Material für den Liner 3 z.B. ein solches Polyurethan verwendet werden, daß aliphatische und/oder aromatische Ether-Gruppen aufweist. Alternativ oder in Ergänzung dazu kann aber beispielsweise auch ein solches Polyurethan verwendet werden, daß aliphatische und/oder aromatische Ester-Gruppen.
Zum Herstellen des Liners werden wenigstens vier Ausgangskomponenten A, B, C, F benötigt, von denen zumindest eine erste Primärkomponente A und eine zweite Primärkomponente B miteinander reaktionsfähig sind. Bei der ersten Primärkomponente A kann es sich, wie bei der Herstellung von Polyurethan üblich, beispielsweise um ein Präpolymer handeln, während die zweite Primärkomponente B beispielsweise ein zweiwertiger Alkohol sein kann. Bekanntermaßen läuft die chemische Reaktion der beiden Primärkomponenten - hier eine Polyaddition - bei Zugabe wenigstens einer als Katalysator dienenden Sekundärkomponente C beschleunigt ab. Als Katalysator kann dabei beispielsweise eine Zinn-organo-Verbindung oder eine andere metall-organische Verbindungen dienen. Als weitere - hier als Tertiärkomponente F bezeichnete - Ausgangskomponente wird schließlich ein, insb. farbgebender, Füllstoff verwendet. Dies kann beispielsweise eine reaktive Farbe oder eine, z.B. Kohlenstoffpartikel enthaltende oder daraus bestehende, Pigmentfarbe sein. Insbesondere für den Fall, daß es sich bei dem für den Liner verwendeten Kunststoff um eine Polyurethan handelt, hat sich beispielsweise der Einsatz von dem reaktiven Farbstoff Reactin® Black X95AB sehr bewährt, wie es derzeit von der Firma Milliken Chemical, Tochterfirma Milliken & Company, Spartanburg, South Carolina, US für die Colorierung von Polyurethanen angeboten wird. Aber auch die Verwendung von Schwarzpigment, beispielsweise PRINTEX® F 80, von der Firma Degussa AG, Düsseldorf, DE, hat sich als sehr vorteilhaft für Herstellung von Linern der beschriebenen Art erwiesen. Da der Katalysator in nur sehr geringer Konzentration benötigt wird, wird zum Herstellen des Liners zunächst ein als eine Zwischenkomponente dienendes, insb. auch lagerfähiges, erstes Mehrkomponentensystem gebildet, das sowohl den hier als Sekundärkomponente C dienenden Katalysator als auch den hier als Tertiärkomponente F dienenden Füllstoff zumindest anteilig enthält. Es hat sich ferner gezeigt, daß für den Fall, das als Tertiärkomponente F eine reaktive Farbe gewählt ist, das erste Mehrkomponentensystems auch bereits einen Anteil des im Ausführungsbeispiels als zweite Primärkomponente B dienenden Alkohols enthalten kann, ohne daß die chemische Beständigkeit des Mehrkomponentensystems, insb. aber die Wirksamkeit des darin enthaltenen Katalysators, in unverträglichem Maße herabgesetzt würde.
Der Liner 3 wird schließlich dadurch erzeugt, daß unter Verwendung des ersten Mehrkomponentensystems ein fließfähiges, insb. flüssiges, zweite Mehrkomponentensystem ABCF gebildet wird, das jedes der vier Ausgangskomponenten - also die beiden Primärkomponenten A, B sowie die Sekundär- und die Tertiärkomponente C, F - in einer die chemische Reaktion der beiden Primärkomponenten A, B ermöglichenden Konzentration enthält, und daß dieses zweite Mehrkomponentensystem ABCF in das Lumen des Trägerohrs 2 verbracht und daselbst die darin enthaltenen Primärkomponenten A, B unter Einwirkung des Katalysators zumindest anteilig miteinander zum Kunststoff - hier dem Polyurethan - reagieren gelassen werden. Vorzugsweise sind Konzentration und Menge der beigegebenen Ausgangskomponenten dabei so bemessen, daß das auf das Trägerrohr 2 applizierte Mehrkomponentensystem ABCF innerhalb einer vergleichsweise kurzen Reaktionszeit von weniger als einer Minute, insb. unter 30 Sekunden, und bei einer Verarbeitungstemperatur von weniger als 100°C, beispielsweise bei etwa 25°C, zumindest in ausreichendem so fest wird, daß es nicht mehr zerfließen kann. Schlußendlich wird das Trägerrohr 2 in geeigneter Weise gelagert, um den Kunststoff vollständig ausreagieren und insoweit auch bis zu einer vorgegebenen Endfestigkeit vollständig aushärten zu lassen. Es sei jedoch an dieser Stelle darauf hingewiesen, daß die für das Festwerden, Ausreagieren und Aushärten des Kunststoffs jeweils erforderliche Zeitspanne neben der Dosierung der Ausgangskomponenten des Mehrkomponentensystems ABCF zusätzlich durchaus auch durch eine geeignete Führung der Verarbeitungs- und/oder Lagertemperatur im einzelnen optimiert werden kann. Insbesondere kann die Lagertemperatur für die einzelnen Primärkomponenten sowie der als Zwischenkomponente dienenden ersten Mehrkomponentensystem in vorteilhafter Weise etwa zwischen 50 und 100°C liegen.
Nach einer Ausgestaltung der Erfindung wird das im wesentlichen flüssige Mehrkomponentensystem ABCF unter Verwendung eines innerhalb des Lumens des Trägerrohrs 2 verfahrbaren Gieß- oder Sprühkopfs im sogenannten Ribbon-Flow-Verfahren auf die Innenwand des Trägerrohrs 2 appliziert, wobei die benötigten Ausgangskomponenten praktisch erst unmittelbar vor dem Applizieren mittels eines Gieß- oder Sprühkopf einer entsprechenden Appliziervorrichtung, beispielsweise einer Niederdruck- oder einer Hochdruck-Dosier-/Misch-/Gießanlage, miteinander final vermischt werden. Das Vermischen erfolgt dabei nicht nur zeitlich unmittelbar vor dem Applizieren, sondern zumeist auch räumlich unmittelbar vor oder direkt in besagtem Gieß- oder Sprühkopf, um eine möglichst kurze Verweildauer des zweiten Mehrkomponentensystems ABCF in der Appliziervorrichtung zu erreichen. Durch gleichzeitiges Rotierenlassen des Trägerrohrs 2 um seine Längsachse und Verfahren des Gieß- oder Sprühkopfs im wesentlichen parallel zur Längsachse kann das zumindest über einen ausreichend langen Zeitraum fließfähige Mehrkomponentensystem ABCF auf sehr einfache sehr und gut reproduzierbare Weise nicht nur flächendeckend, sondern auch in vorgebbarer Weise im wesentlichen gleichmäßig über die gesamte Innenwand verteilt werden. Von der vorgenannten Appliziervorrichtung ist ein Ausführungsbeispiel in Fig. 3 schematisiert dargestellt. Die Appliziervorrichtung weist drei Vorratsbehälter auf, von denen ein erster Vorratsbehälter E-100 für die Aufnahme eines Gebindes der ersten Primärkomponente A, ein zweiter Vorratsbehälter E-101 für die Aufnahme eines Gebindes der zweiten Primärkomponente B und ein dritter Vorratsbehälter E-102 für die Aufnahme eines Gebindes des als Zwischenkomponente dienenden ersten Mehrkomponentensystems CF, BF bzw. BCF vorgesehen ist. In vorteilhafter Weise ist jeder der drei Vorratsbehälter E-100, E-101, E-102 mit einem im Inneren angeordneten Rührer zum wiederholten Umwälzen der jeweils bevorrateten Komponente sowie einer deren Temperierung dienenden äußeren Heizanordnung E-104, E-116, bzw. E-117 versehen. Die Vorratsbehälter E-100, E-101, E-102 sind über entsprechende Fluidleitungen sowie in deren Verlauf entsprechend eingesetzte Steuerventile V-1 04...V-1 07, V-110...V-115, V-121 ...V-123 und Pumpvorrichtung E-123, E-125, E-127 an den Gieß- oder Sprühkopf angeschlossen. Nach einer vorteilhaften Ausgestaltung sind die durch die Fluidleitungen sowie die jeweils darin eingebundenen Ventile und Pumpen gebildeten Strömungspfade für die einzelnen Komponenten jeweils in der Weise realisiert, daß das jeweils darin geführte Medium in allfälligen Pausenzeiten innerhalb der Appliziervorrichtung einem eigenen Kreislauf rezirkulieren kann.
Gemäß einer weiteren Ausgestaltung der Erfindung wird zunächst wenigstens ein Gebinde vom ersten Mehrkomponentensystem in einem geeigneten Vorratsbehälter, beispielsweise einem Vorratsbehälter der vorgenannten Appliziervorrichtung, angesetzt. Dieses wenigstens eine Gebinde kann dann anschließend zum Bilden einer Vielzahl, insb. einer Sequenz, von Portionen des zweiten Mehrkomponentensystems mittels eines dem Gebinde vom ersten Mehrkomponentensystem entnommenen Teilvolumens verwendet werden. Die Größe des wenigstens eine Gebindes ist dabei in vorteilhafter Weise so gewählt, daß der so angelegte Vorrat am ersten Mehrkomponentensystem z.B. ein Vielfaches des Tagesbedarfs der zugehörigen Appliziervorrichtung decken kann. Allerdings kann das aus dem Vorratsbehälter vom darin angesetzten Gebinde entnommene Teilvolumen praktisch jederzeit wiederkehrend ersetzt werden, beispielsweise auch dann, wenn im Vorratsbehälter noch vom ursprünglich angesetzten Gebinde verbliebene Restanteile des ersten Mehrkomponentensystem enthalten sind.
Beim Herstellen des ersten Mehrkomponentensystems ergeben sich nunmehr verschiedene Möglichkeiten hinsichtlich des Umfanges und/oder der Reihenfolge des Zusammenmischens der darin schlußendlichen enthaltenen Ausgangskomponenten. So kann beispielsweise der Schritt des Bildens des ersten Mehrkomponentensystems zumindest bei Verwendung von reaktiver Farbe als Füllstoff weiters einen Schritt des Zusammenführens von zumindest auch einem Anteil der zweiten Primärkomponente und der Tertiärkomponente umfassen. Insoweit umfaßt das Verfahren schließlich auch wenigstens einen Schritt des Zusammenführens von Sekundärkomponente und Tertiärkomponente sowie zumindest einem Anteil der zweiten Primärkomponente zum Bilden des ersten Mehrkomponentensystems. Der Schritt des Zusammenführens von zweiten Primärkomponente und Tertiärkomponente sollte dabei allerdings dem Schritt des Zusammenführens von Sekundärkomponente und Tertiärkomponente vorausgehen, um ein Reagieren der zweiten Primärkomponente mit der Sekundärkomponente sicher vermeiden zu können. Dementsprechend erfolgt also auch der Schritt des Zusammenführens von Sekundärkomponente und Tertiärkomponente sowie zumindest einem Anteil der zweiten Primärkomponente nach dem zumindest ein Anteil der zweiten Primärkomponente und der Tertiärkomponente miteinander vermischt worden sind. In jedem Fall werden allerdings bei der Herstellung des ersten Mehrkomponentensystems, zu welchem Zeitpunkt auch immer, Sekundärkomponente und Tertiärkomponente zumindest anteilig zusammengeführt. Darüber hinaus kann das zweite Mehrkomponentensystem ABCF schließlich dadurch gebildet werden, daß das erste Mehrkomponentensystem mit den beiden Primärkomponenten zusammengeführt wird. Beispielsweise können die beiden Primärkomponenten dabei simultan zum ersten Mehrkomponentensystem hinzugegeben werden.
Für den bereits erwähnten Fall, daß das In-Line-Meßgerät auch dazu dienen soll, im Betrieb solche Fluide zu messen, die erhöhten Anforderungen hinsichtlich chemisch-biologischer wie auch bakteriologischer Reinheit unterworfen sind, wie z.B. Trinkwasser, kann - oder vielmehr sollte - zur Herstellung des für den Liner verwendeten Polyurethans möglichst auf die Verwendung eines schwermetallhaltigen und/oder eines aminhaitigen Katalysators verzichtet werden, wenngleich diese Arten von Katalysatoren wegen ihrer guten Reaktivität für die Herstellung von Polyurethan eigentlich sehr vorteilhaft wären. Anstelle dessen kann für die Herstellung des Liners in vorteilhafter Weise auch ein Polyurethan verwendet werden, daß, wie in der eingangs erwähnten und insoweit hier als Referenz dienenden,
WO-A 2006/067077 vorgeschlagen, mit Hilfe eines metall-organische Verbindungen aufweisenden Katalysators gebildet ist.
Nach einer Ausgestaltung der Erfindung enthält der für die Herstellung des Polyurethans verwendete Katalysator daher Zinn-organo-Verbindungen, insb. Di-n-octylzinn-Verbindungen, wodurch sichergestellt werden kann, daß das über den Katalysator in den fertigen Liner 3 eingebrachte und dort verbliebene Zinn (Sn) chemisch und/oder physikalisch im Liner gebunden und insoweit dauerhaft eingebettet ist. Nach einer Ausgestaltung der Erfindung wird folgende Zinn-organo-Verbindung als Katalysator C zur Herstellung des Polyurethans für den Liner 3 verwendet:

C₄₀H₈₀O₄Sn (1)

Als besonders vorteilhafter Katalysator für die Herstellung des Liners hat sich beispielsweise Di-n-octylzinndilaurat (DOTL) erwiesen, dessen Struktur sich schematisch wie folgt darstellen läßt: 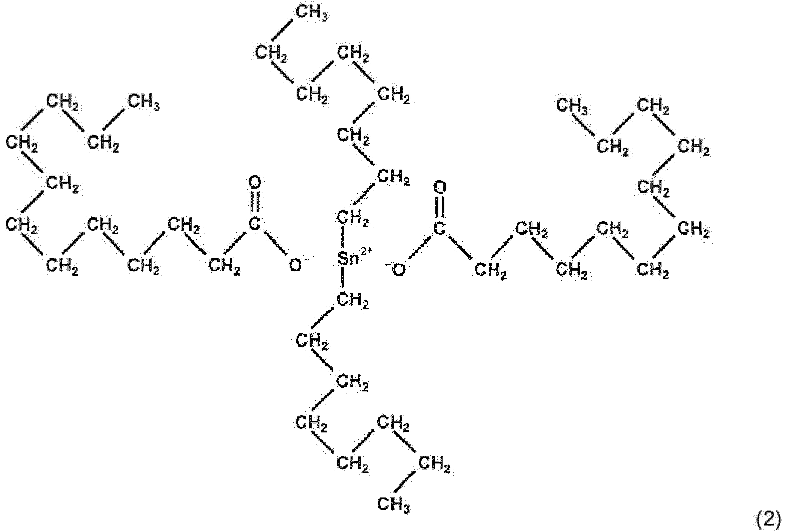 Darüber hinaus können beispielsweise auch Dioctylzinndimalinate oder ähnlich metall-organische Verbindungen als Katalysatoren für die Herstellung des Liners verwendet werden. Durch die Verwendung von metall-organischen Verbindungen der beschriebenen Art als Sekundärkomponente ist das Polyurethan so ausgebildet, daß die mit dem Katalysator in den Liner eingebrachten und dort verbliebenen Metalle (Me) chemisch, insb. atomisch, und/oder physikalisch, insb. durch Cross-Linking, an im Liner gebildete Kohlenstoffketten gebunden sind. Ein Vorteil dieses Katalysators besteht darin, daß dessen Organo-Metall-Verbindungen derart in das Material des Liners eingebaut werden, daß auch unter Einwirkung von Wasser im Betrieb des In-Line-Meßgeräts - wenn überhaupt - allenfalls in physiologisch unbedenklichen Mengen und Raten des Katalysators aus dem Liner ausgelöst werden. Infolge der weitgehenden Amin- und Schwermetallfreiheit des für die Herstellung des Liners 3 verwendeten Polyurethans kann das fertige In-Line-Meßgerät sogar die für Anwendungen im Trinkwasserbereich gestellten, insb. auch im Vergleich zu anderen Lebensmitteianwendungen, sehr hohen hygienischen Anforderungen erfüllen. Untersuchungen haben beispielsweise gezeigt, daß die Migrationsrate (M_{max, TOC}) hinsichtlich des gesamtorganischen Kohlenstoffgehaltes (TOC) unterhalb von 0,25 Milligramm pro Liter und Tag liegen kann, während für die Chlorzehrungsrate (M_{max, Cl}) durchaus Wert von weniger als 0,2 Milligramm pro Liter und Tag erreicht werden können. Insoweit kann das erfindungsgemäße In-Line-Meßgerät beispielsweise auch den mit der einschlägigen "Leitlinie zur hygienischen Beurteilung von Epoxidharzbeschichtungen im Kontakt mit Trinkwasser" an Ausrüstungsgegenstände im Verteilungsnetz, insb. auch in Bauptleitungen und/oder mit dem einschlägigen NSF/ANSI Standard 61 an Trinkwassersystemkomponenten gestellten Forderungen genügen. Zu dem hat sich gezeigt, daß bei Verwendung derartiger metallorganischer Verbindungen als Katalysator nicht nur, wie bereits eingangs erwähnt, durchaus für Trinkwasseranwendungen taugliche Liner herstellbar sind, sondern daß darüber hinaus auch das damit angesetzte erste Mehrkomponentensystem sowohl bei der Verwendung reaktiver Farben als auch bei der Verwendung von Pigmentfarben als Tertitärkomponente in für den Herstellungsprozeß ausreichendem Maße lagerfähig sein kann. So ließen sich beispielsweise für ein solches mittels Di-n-octylzinndilaurat sowie mittels PRINTEX® F 80 hergestelltes Mehrkomponentensystem Verfallszeiten von mehr als acht Wochen ermitteln. Daher ist nach einer Ausgestaltung des erfindungsgemäßen Verfahrens ferner vorgesehen ein vom ersten Mehrkomponentensystem angesetztes Gebinde über einen Zeitraum von wenigstens 24 Stunden, insb. aber von mehr als drei Tagen, zum Bilden von Portionen des zweiten Mehrkomponentensystems zu verwenden. Dementsprechend vergehen also zwischen dem Schritt des Bildens des ersten Mehrkomponentensystems und dem Schritt des Bildens des zweiten Mehrkomponentensystems wenigstens 24 Stunden, insb. aber mehr als drei Tage.
Nach einer weiteren Ausgestaltung der Erfindung handelt es sich bei dem Polyurethan um ein auf Basis des zweiten Mehrkomponentensystems ABCF hergestelltes Elastomere, das zumindest anteilig im wesentlichen folgende Struktur aufweist:

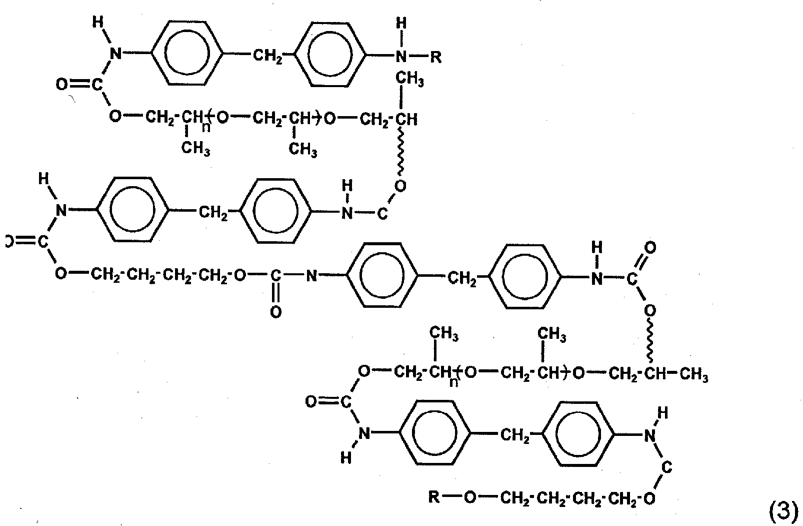

Nach einer weiteren Ausgestaltung der Erfindung handelt es sich bei dem für die Herstellung des Liners 3 verwendeten Alkohol um einen solchen mit mindestens zwei funktionellen OH-Gruppen, beispielsweise ein Diol. Besonders gute Ergebnisse lassen sich hierbei durch Verwendung eines Butandiol erzielen.

Des weiteren haben sich Präpolymere mit aromatischen oder aliphatischen Isocyanat-Gruppen, insb. mit zwei oder mehr reaktiven NCO-Gruppen, als vorteilhaft für die Herstellung des Liners 3 gezeigt. Nach einer anderen Ausgestaltung der Erfindung ist das Präpolymer daher zumindest anteilig gemäß folgender Strukturformel aufgebaut:

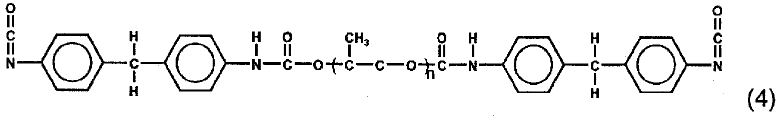

Zur Herstellung eines solchen Präpolymers wird gemäß einer Weiterbildung der Erfindung ein Polypropylenoxid verwendet, das mit einem, insb. überschüssig zugegebenen, aromatischen Diisocyanat reagieren gelassen wird.

Gemäß einer weiteren Ausgestaltung der Erfindung wird als Polypropylenoxid ein Polypropylenglykol (PPG) verwendet, dessen Struktur vereinfacht etwa wie folgt beschrieben werden kann:

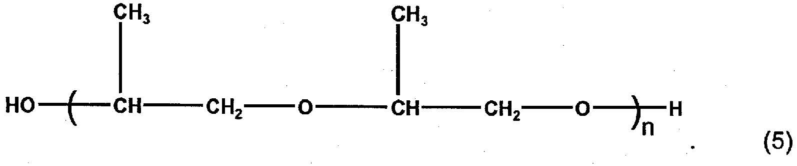

Alternativ oder in Ergänzung zum Polypropylenoxid kann beispielsweise auch ein Polytetramethylenetherglykol (PTMEG) mit folgendem strukturellen Aufbau zur Herstellung des Präpolymers dienen:

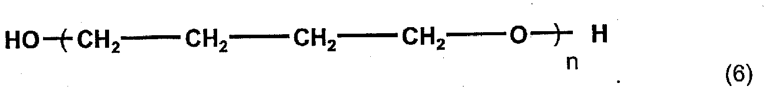

Darüber hinaus - alternativ oder in Ergänzung - können aber auch andere aliphatisch aufgebaute Glykol-Verbindungen mit polymeren Ether-Gruppe und endständigen OH-Gruppen zur Herstellung des Präpolymers verwendete werden.

Nach einer anderen Ausgestaltung der Erfindung handelt es sich bei dem für die Herstellung des Präpolymers verwendeten aromatischen Diisocyanat um ein Diphenylmethan-diisocyanat (MDI), insb. mit wenigstens einer der folgenden Strukturen:

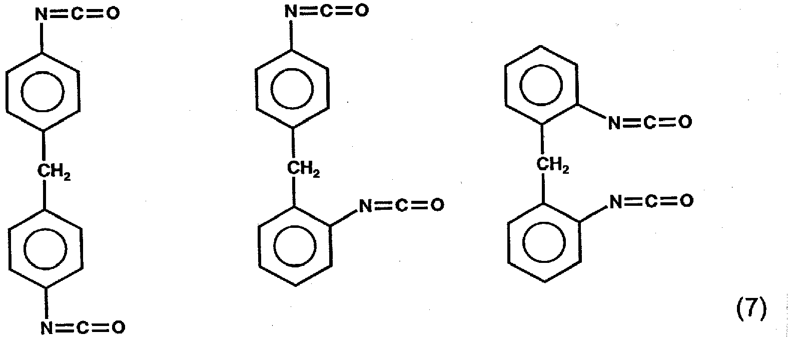

Experimentelle Untersuchungen haben hierbei ferner ergeben, daß sich, insb. bei Verwendung der oben beschriebene Präpolymere-Systeme (PPG+MDI und/oder PTMEG+MDI), solche kurzen Reaktionszeiten bereits durch Zugabe der als Sekundärkomponente C dienenden Katalysators mit einem Masseanteil von weniger als 0,1% der Gesamtmasse des zweiten Mehrkomponentensystems ABCF erreicht werden können. Weiterführenden Untersuchungen haben ferner ergeben, daß sich besonders gute Ergebnisse bei der Herstellung des Liners 3 erzielen lassen, wenn der als zweite Primärkomponente B dienende Alkohohl dem als erste Primärkomponente A dienenden Präpolymer in einem Mischungsverhältnis B:A von etwa 15:100 oder weniger, insb. einem Mischungsverhältnis B:A von weniger als 10:100, zugegeben wird.

Aufgrund der Verwendung von Polyurethan als Material für den Liner 3 kann das Meßrohr 1 ohne weiteres mit Nennweiten im Bereich zwischen 25 mm und 2000 mm gefertigte werden. Gleichermaßen kann somit, insb. auch unter Anwendung des vorbeschriebenen Ribbon-flow-Verfahrens für die Herstellung des Liners 3, sichergestellt werden, daß der Liner 3 eine möglichst gleichmäßige Dicke von weniger als 5 mm, insb. weniger als 3 mm aufweist.

## Patentansprüche

1. Verfahren zum Herstellen eines ein als Bestandteil eines In-Line-Meßgeräts dienenden, insb. metallischen, Trägerrohr (2) innen auskleidenden Liners (3) aus einem unter Verwendung von wenigstens vier Ausgangskomponenten (A, B, C, F) hergestellten Kunststoff, nämlich einem Polyurethan, von welchen vier Ausgangskomponenten (A, B, C, F) wenigstens eine erste Primärkomponente (A) und eine zweite Primärkomponente (B) miteinander reaktionsfähig sind, wobei als Primärkomponente (A) ein Präpolymer und als zweite Primärkomponente (B) ein, insb. zweiwertiger, Alkohol dienen, wobei eine chemische Reaktion der ersten Primärkomponente (A) mit der zweiten Primärkomponente (B) bei Zugabe wenigstens einer als Katalysator dienenden Sekundärkomponente (C) beschleunigt wird, und wobei zumindest eine Tertiärkomponente (F) als ein, insb. farbgebender, Füllstoff dient, welches Verfahren folgende Schritte umfaßt:
- Bilden eines als eine Zwischenkomponente dienenden, insb. auch lagerfähigen, ersten Mehrkomponentensystems (CF; BCF), das sowohl die Sekundärkomponente (C) als auch die Tertiärkomponente (F) zumindest anteilig enthält,
- Bilden eines die vier Ausgangskomponenten (A, B, C, F) enthaltenden, fließfähigen, insb. flüssigen, zweiten Mehrkomponentensystems (ABCF) unter Verwendung des ersten Mehrkomponentensystems (CF; BCF), nämlich indem das erste Mehrkomponentensystem (CF; BCF) mit den beiden Primärkomponenten (A, B) zusammengeführt wird, wobei das zweite Mehrkomponentensystem (ABCF) die vier Ausgangskomponenten (A, B, C, F) in einer die chemische Reaktion zumindest von Anteilen der beiden Primärkomponenten (A, B) ermöglichende Konzentration enthält,
- Applizieren des zweiten Mehrkomponentensystems (ABCF) auf eine Innenwand des Trägerrohrs (2)
- sowie Erzeugen des das Trägerrohr (2) innen auskleidenden Liners (3) aus Kunststoff mittels des auf die Innenwand des Trägerrohrs (2) applizierten zweiten Mehrkomponentensystems (ABCF) indem die darin enthaltene Primärkomponente (A) und die darin enthaltene zweite Primärkomponente (B) innerhalb des Trägerrohrs (2) zumindest anteilig miteinander reagieren gelassen werden.

2. Verfahren nach Anspruch 1, wobei der Schritt des Bildens des ersten Mehrkomponentensystems (CF; BCF) weiters einen Schritt des Zusammenführens von Sekundärkomponente (B) und Tertiärkomponente (F) umfaßt.

3. Verfahren nach einem der vorherigen Ansprüche, wobei der Schritt des Bildens des ersten Mehrkomponentensystems (CF; BCF) weiters einen Schritt des Zusammenführens von zumindest einem Anteil der zweiten Primärkomponente (B) und der Tertiärkomponente (F) umfaßt.

4. Verfahren nach einem der vorherigen Ansprüche, wobei der Schritt des Bildens des ersten Mehrkomponentensystems (CF; BCF) weiters einen Schritt des Zusammenführens von Sekundärkomponente (C) und Tertiärkomponente (F) sowie zumindest einem Anteil der zweiten Primärkomponente (B) umfaßt.

5. Verfahren nach dem vorherigen Anspruch, wobei der Schritt des Zusammenführens von Sekundärkomponente (C) und Tertiärkomponente (F) sowie zumindest einem Anteil der zweiten Primärkomponente (B) erfolgt nach dem zumindest ein Anteil der zweiten Primärkomponente (B) und der Tertiärkomponente (F) miteinander vermischt worden sind.

6. Verfahren nach einem der vorherigen Ansprüche, wobei der Schritt des Bildens des zweiten Mehrkomponentensystems (ABCF) weiters einen Schritt des, insb. simultanen, Zugebens der ersten Primärkomponente (A) sowie der zweiten Primärkomponente (B) zum ersten Mehrkomponentensystem (CF; BCF) umfaßt.

7. Verfahren nach einem der vorherigen Ansprüche, weiters umfassend Schritte des Ansetzens wenigstens eines Gebindes vom ersten Mehrkomponentensystem (CF; BCF) in einem Vorratsbehälter und des Verwendens des wenigstens einen Gebindes zum Bilden einer Vielzahl, insb. einer Sequenz, von Portionen des zweiten Mehrkomponentensystems (ABCF) mittels eines dem Gebinde vom ersten Mehrkomponentensystem (CF; BCF) entnommenen Teilvolumens.

8. Verfahren nach dem vorherigen Anspruch, wobei das vom ersten Mehrkomponentensystem (CF; BCF) angesetzte Gebinde über einen Zeitraum von mehr als drei Tagen zum Bilden von Portionen des zweiten Mehrkomponentensystems (ABCF) verwendet wird.

9. Verfahren nach dem vorherigen Anspruch, wobei die beiden Primärkomponenten (A, B) bei einer Umgebungstemperatur von weniger als 100°C, insb. bei etwa 25°C, miteinander reagieren gelassen werden.

10. Verfahren nach einem der vorherigen Ansprüche, wobei zwischen dem Schritt des Bildens des ersten Mehrkomponentensystems (CF; CBF) und dem Schritt des Bildens des zweiten Mehrkomponentensystems (ABCF) wenigstens 24 Stunden, insb. mehr als 3 Tage, vergehen.

11. Verfahren nach einem der vorherigen Ansprüche, wobei die Primärkomponente (A), insb. aliphatische und/oder aromatische, Ether-Gruppen aufweist.

12. Verfahren nach einem der vorherigen Ansprüche, wobei die Primärkomponente (A) aromatische oder aliphatische Isocyanat-Gruppen aufweist.

13. Verfahren nach dem vorherigen Anspruch, wobei die Primärkomponente (A) reaktive NCO-Gruppen aufweist.

14. Verfahren nach einem der vorherigen Ansprüche, wobei die zweite Primärkomponente (B) funktionelle OH-Gruppen aufweist.

15. Verfahren nach dem vorherigen Anspruch, wobei es sich bei der zweiten Primärkomponente (B) um ein Diol, insb. ein Butandiol, handelt.

16. Verfahren nach einem der vorherigen Ansprüche, wobei die Sekundärkomponente (C), insb. von einem physiologisch unbedenklichen Metall gebildete, metall-organische Verbindungen, insb. zinn-organo Verbindungen, aufweist.

17. Verfahren dem vorherigen Anspruch, wobei die Sekundärkomponente (C) zinn-organo Verbindungen, insb. Di-n-octylzinn-Verbindungen, aufweist.

18. Verfahren nach dem vorherigen Anspruch, wobei es sich bei der Sekundärkomponente (C) um ein Di-n-octylzinndilaurat und/oder ein Di-n-octylzinndimalinat handelt.

19. Verfahren nach einem der vorherigen Ansprüche, wobei die Tertiärkomponente (F) eine reaktive Farbe enthält.

20. Verfahren nach einem der vorherigen Ansprüche, wobei die Tertiärkomponente (F) funktionelle OH-Gruppen aufweist.

21. Verfahren nach einem der vorherigen Ansprüche, wobei die Tertiärkomponente (F) eine, insb. pastöse, Pigmentfarbe enthält.

22. Verfahren nach einem der vorherigen Ansprüche, wobei die Tertiärkomponente (F), insb. pulverförmigen, Kohlenstoff enthält.

23. Verfahren nach einem der vorherigen Ansprüche, wobei die Tertiärkomponente (F) Ruß enthält.

## Claims

1. Procedure for the fabrication of a liner (3) serving, as a part of an inline measuring device, to line the interior of a, particularly metallic, support tube (2), said liner being made from a plastic made from at least four initial components (A, B, C, F), particularly a polyurethane, wherein of the said four initial components (A, B, C, F) at least a first primary component (A) and a second primary component (B) can react with one another, where a prepolymer acts as the primary component (A) and an alcohol, particularly bivalent, serves as the second primary component (B), wherein a chemical reaction between the first primary component (A) and the second primary component (B) is accelerated by adding at least a secondary component (C) acting as a catalyst, and wherein at least a tertiary component (F) serves as a filler, particularly a coloring filler,
wherein said procedure comprises the following steps:
- Formation of a first multicomponent system (CF, BCF), particularly also a storable system, serving as an intermediate component, which contains both the secondary component (C) and the tertiary component (F), at least in part
- Formation of a fluid, particularly liquid, second multicomponent system (ABCF), containing the four initial components (A, B, C, F), using the first multicomponent system (CF, BCF), namely in that the first multicomponent system (CF, BCF) is fused with the two primary components (A, B), wherein the second multicomponent system (ABCF) contains the four initial components (A, B, C, F) in a concentration that permits the chemical reaction at least of parts of the two primary components (A, B),
- Application of the second multicomponent system (ABCF) on an interior wall of the support tube (2),
- And the production of the liner (3) lining the inside of the support tube (2) from plastic, using the second multicomponent system (ABCF) applied on the interior wall of the support tube (2), by allowing the primary component (A) contained in the multicomponent system and the second primary component (B) contained in the multicomponent system to react with one another, at least in part, within the support tube (2).

2. Procedure as claimed in Claim 1, wherein the step involving the formation of the first multicomponent system (CF, BCF) further comprises a step of fusing the secondary component (B) and the tertiary component (F).

3. Procedure as claimed in one of the previous claims, wherein the step involving the formation of the first multicomponent system (CF, BCF) further comprises a step of fusing at least a part of the second primary component (B) and the tertiary component (F).

4. Procedure as claimed in one of the previous claims, wherein the step involving the formation of the first multicomponent system (CF, BCF) further comprises a step of fusing the secondary component (C) and the tertiary component (F) and at least a part of the second primary component (B).

5. Procedure as claimed in the previous claim, wherein the step involving the fusion of the secondary component (C) and the tertiary component (F) and at least a part of the second primary component (B) takes place after at least a part of the second primary component (B) and the tertiary component (F) have been mixed with one another.

6. Procedure as claimed in one of the previous claims, wherein the step to form the second multicomponent system (ABCF) further comprises a step of adding, particularly simultaneously, the first primary component (A) and the second primary component (B) to the first multicomponent system (CF, BCF).

7. Procedure as claimed in one of the previous claims, further comprising steps involving the preparation of at least a container of the first multicomponent system (CF, BCF) in a storage vessel and the use of the at least one container to form a multitude, particularly a sequence, of portions of the second multicomponent system (ABCF) using a sub-volume taken from the container of the first multicomponent system (CF, BCF).

8. Procedure as claimed in the previous claim, wherein the prepared container of the first multicomponent system (CF, BCF) is used over a period of more than three days to form portions of the second multicomponent system (ABCF).

9. Procedure as claimed in the previous claim, wherein the two primary components (A, B) are allowed to react with one another at an ambient temperature of less than 100 °C, particularly at around 25 °C.

10. Procedure as claimed in one of the previous claims, wherein at least 24 hours, particularly more than 3 days, pass between the step involving the formation of the first multicomponent system (CF, BCF) and the step involving the formation of the second multicomponent system (ABCF).

11. Procedure as claimed in one of the previous claims, wherein the primary component (A) features ether groups, particularly aliphatic and/or aromatic.

12. Procedure as claimed in one of the previous claims, wherein the primary component (A) features aromatic or aliphatic isocyanate groups.

13. Procedure as claimed in the previous claim, wherein the primary component (A) features reactive NCO groups.

14. Procedure as claimed in one of the previous claims, wherein the second primary component (B) has functional OH groups.

15. Procedure as claimed in the previous claim, wherein the second primary component (B) is a diol, particularly a butanediol.

16. Procedure as claimed in one of the previous claims, wherein the secondary component (C) features metal-organic compounds, particularly made from a physiologically neutral metal, particularly organic-tin compounds.

17. Procedure as claimed in the previous claim, wherein the secondary component (C) features organic-tin compounds, particularly di-n-octyl tin compounds.

18. Procedure as claimed in the previous claim, wherein the secondary component (C) is a di-n-octyl tin dilaurate and/or a di-n-octyl tin dimalinate.

19. Procedure as claimed in one of the previous claims, wherein the tertiary component (F) contains a reactive dye.

20. Procedure as claimed in one of the previous claims, wherein the tertiary component (F) features functional OH groups.

21. Procedure as claimed in one of the previous claims, wherein the tertiary component (F) contains a pigment, particularly paste-like.

22. Procedure as claimed in one of the previous claims, wherein the tertiary component (F) contains carbon, particularly in powder form.

23. Procedure as claimed in one of the previous claims, wherein the tertiary component (F) contains carbon black.

## Revendications

1. Procédé destiné à la fabrication d'une garniture (3) servant, en tant que constituant d'un appareil de mesure en ligne, à revêtir l'intérieur d'un tube de mesure (2), notamment métallique, la garniture étant constituée d'une matière plastique fabriquée en utilisant au moins quatre composants de départ (A, B, C, F), notamment un polyuréthane, dont parmi les quatre composants de départ (A, B, C, F) au moins un premier composant primaire (A) et un deuxième composant primaire (B) sont capables de réagir mutuellement, un prépolymère servant de composant primaire (A) et un alcool, notamment bivalent, servant de deuxième composant primaire (B), une réaction chimique du premier composant primaire (A) avec le deuxième composant primaire (B) étant accélérée par addition d'au moins un composant secondaire (C) servant de catalyseur, et un composant tertiaire (F) servant de charge, notamment colorant,
lequel procédé comprend les étapes suivantes :
- Formation d'un premier système multicomposant (CF, BCF) servant de composant intermédiaire, notamment également stockable, qui contient au moins partiellement à la fois le composant secondaire (C) et le composant tertiaire (F),
- Formation d'un deuxième système multicomposant (ABCF) fluide, notamment liquide, contenant les quatre composants de départ (A, B, C, F), en utilisant le premier système multicomposant (CF, BCF), notamment en ce que le premier système multicomposant (CF, BCF) est fusionné avec les deux composants primaires (A, B), le deuxième système multicomposant (ABCF) contenant les quatre composants de départ (A, B, C, F) selon une concentration permettant la réaction chimique au moins de parts des deux composants primaires (A, B),
- Application du deuxième système multicomposant (ABCF) sur une paroi intérieure du tube support (2),
- ainsi que génération de la garniture (3) en matière plastique revêtant l'intérieur du tube support (2), au moyen du deuxième système multicomposant (ABCF) appliqué sur la paroi intérieure du tube support (2), laquelle génération est obtenue en faisant au moins partiellement réagir mutuellement le composant primaire (A), qui est contenu dans le système, et le deuxième composant primaire (B), qui est contenu dans le système, à l'intérieur du tube support (2).

2. Procédé selon la revendication 1, pour lequel l'étape de la formation du premier système multicomposant (CF, BCF) comprend en outre une étape de la fusion du composant secondaire (B) et du composant tertiaire (F).

3. Procédé selon l'une des revendications précédentes, pour lequel l'étape de la formation du premier système multicomposant (CF, BCF) comprend en outre une étape de la fusion d'au moins une part du deuxième composant primaire (B) et du composant tertiaire (F).

4. Procédé selon l'une des revendications précédentes, pour lequel l'étape de la formation du premier système multicomposant (CF, BCF) comprend en outre une étape de la fusion du composant secondaire (C) et du composant tertiaire (F) ainsi que d'au moins une part du deuxième composant primaire (B).

5. Procédé selon la revendication précédente, pour lequel l'étape de la fusion du composant secondaire (C) et du composant tertiaire (F) ainsi que d'au moins une part du deuxième composant primaire (B) intervient après qu'au moins une part du deuxième composant primaire (B) et du composant tertiaire (F) aient été mélangés.

6. Procédé selon l'une des revendications précédentes, pour lequel l'étape de la formation du deuxième système multicomposant (ABCF) comprend en outre une étape de l'ajout, notamment simultané, du premier composant primaire (A) ainsi que du deuxième composant primaire (B) relatifs au premier système multicomposant (CF, BCF).

7. Procédé selon l'une des revendications précédentes, comprenant en outre la préparation d'un contenant du premier système multicomposant (CF, BCF) dans un réservoir de stockage, et l'utilisation de l'au moins un contenant pour la constitution d'un grand nombre, notamment d'une séquence, de portions du deuxième système multicomposant (ABCF) au moyen du volume partiel du premier système multicomposant (CF, BCF) prélevé du contenant.

8. Procédé selon la revendication précédente, pour lequel le contenant préparé du premier système multicomposant (CF, BCF) est utilisé sur une période de plus de trois jours pour la constitution de portions du deuxième système multicomposant (ABCF).

9. Procédé selon la revendication précédente, pour lequel les deux composants primaires (A, B) sont amenés à réagir mutuellement à une température ambiante inférieure à 100 °C, notamment à environ 25 °C.

10. Procédé selon l'une des revendications précédentes, pour lequel il s'écoule, entre l'étape de la formation du premier système multicomposant (CF, BCF) et l'étape de la formation du deuxième système multicomposant (ABCF), au moins 24 heures, notamment plus de 3 jours.

11. Procédé selon l'une des revendications précédentes, pour lequel le composant primaire (A) présente des groupes d'éther, notamment aliphatiques et/ou aromatiques.

12. Procédé selon l'une des revendications précédentes, pour lequel le composant primaire (A) présente des groupes d'isocyanate aromatiques ou aliphatiques..

13. Procédé selon la revendication précédente, pour lequel le composant primaire (A) présente des groupes NCO réactifs.

14. Procédé selon l'une des revendications précédentes, pour lequel le deuxième composant primaire (B) présente des groupes OH fonctionnels.

15. Procédé selon la revendication précédente, pour lequel il s'agit, concernant le deuxième composant primaire (B), d'un diol, notamment un butanediol.

16. Procédé selon l'une des revendications précédentes, pour lequel le composant secondaire (C), présente des composés métallo-organiques, notamment constitués d'un métal physiologiquement neutre, notamment des composés organo-étain.

17. Procédé selon la revendication précédente, pour lequel le composant secondaire (C) présente des composés organo-étain, notamment des composés di(n-toctyl)étain.

18. Procédé selon la revendication précédente, pour lequel, concernant le composant secondaire (C), il s'agit d'un dilaurate de di(n-octyl)étain ou d'un dimalinate di(n-octyl)étain.

19. Procédé selon l'une des revendications précédentes, pour lequel le composant tertiaire (F) contient une couleur réactive.

20. Procédé selon l'une des revendications précédentes, pour lequel le composant tertiaire (F) présente des groupes OH fonctionnels.

21. Procédé selon l'une des revendications précédentes, pour lequel le composant tertiaire (F) contient une couleur à base de pigments, notamment pâteuse.

22. Procédé selon l'une des revendications précédentes, pour lequel le composant tertiaire (F) contient du carbone, notamment pulvérulent.

23. Procédé selon l'une des revendications précédentes, pour lequel le composant tertiaire (F) contient de la suie.
